# EUROPÄISCHE PATENTANMELDUNG

(11) **EP 4 242 281 A1**
(43) Veröffentlichungstag der Anmeldung: **13.09.2023**
(21) Anmeldenummer: 22161633.7
(22) Anmeldetag: 11.03.2022
(51) Int. Cl.: C09J 175/06

(54) **KLEBSTOFFAUFTRAG IM WALZVERFAHREN**

(71) Anmelder: Alfa Klebstoffe AG, 8197 Rafz (CH)
(72) Erfinder: SIMMLER, Thomas, 8194 Hüntwangen (CH); HEUSSER, Julien, 8374 Dussnang (CH)
(74) Vertreter: Keller Schneider Patent- und Markenanwälte AG

(57) **Zusammenfassung**

Ein Verfahren zum Verkleben von Substraten, insbesondere von Schaumstoffen, umfasst die Schritte:
a) Aufbringen eines Dispersionsklebstoffs (DK) auf einen zu verklebenden Bereich eines ersten Substrats (S1) durch Walzenauftrag;
b) Kontaktieren des zu verklebenden Bereichs des ersten Substrats (S1) mit einem zweiten zu verklebenden Substrat (S2);
c) Verpressen der beiden Substrate (S1, S2), so dass ein verklebter Verbund (V') aus erstem und zweitem Substrat erhalten wird, insbesondere so, dass der verklebte Verbund eine Anfangshaftung aufweist;
wobei der Dispersionsklebstoff eine wässrige Polyurethan-Dispersion sowie einen Weichmacher beinhaltet.

## Beschreibung

### Technisches Gebiet

Die Erfindung betrifft ein Verfahren zum Verkleben von Substraten, insbesondere von Schaumstoffen, mit einem Dispersionsklebstoff. Des Weiteren bezieht sich die Erfindung auf einen verklebten Verbund aus einem ersten und einem zweiten Substrat, insbesondere ein Polsterkern eines Polstermöbels, eines Kissens oder einer Matratze. Ebenfalls Gegenstand der Erfindung ist die gezielte Verwendung eines Weichmachers in einem Dispersionsklebstoff zur Erhöhung der Anfangshaftung beim Verkleben von Substraten, insbesondere von Schaumstoffen.

### Stand der Technik

Für die Verklebung von Schaumstoffen wurden anfänglich mangels anderer Lösungen lösungsmittelhaltige Klebstoffe eingesetzt. Diese Klebstoffe hatten den Nachteil, dass durch die vorhandenen Lösungsmittel (VOC) die Umweltfreundlichkeit nicht gegeben war.

Dieses Problem wurde mit wasserbasierenden Klebstoffen gelöst und der Nachteil von Lösungsmittelemissionen eliminiert. Für diese Anwendungen haben sich am Markt polychloroprenbasierte Dispersionsklebstoffe (CR) durchgesetzt. Diese werden entweder als Einkomponenten- oder Zweikomponentenklebstoffe im Sprühverfahren aufgetragen. Die Formulierungen mit Polychloroprendispersionen weisen eine genügende Anfangshaftung auf, sodass die Schaumstoffteile ohne lange Trocknung weiter verarbeitet werden können.

Die EP 0 624 634 A1 (Alfa Klebstoffe AG) beschreibt beispielsweise eine aufsprühbare Dispersion auf der Basis eines Acrylsäureestercopolymers, eines kolloidalen Chloroprenpolymerisats und Borsäure. Das Sprühgut wird auf wenigstens eine oder beide der Substratflächen aufgetragen, die zu verklebenden Substratflächen nass aufeinander gelegt und während wenigstens etwa 0.5 Sekunden mit mindestens 0.1 N/cm² angedrückt.

Aktuell ist Recycling und Kreislaufwirtschaft eine neue Anforderung an Materialien, u.a. auch in der Möbelindustrie. Jedes Jahr fallen Millionen von gebrauchten Matratzen an, welche hauptsächlich der Deponie oder der Verbrennung zugeführt werden. Seit wenigen Jahren sind mehrere Initiativen und Projekte entstanden, welche Matratzen recyceln und wieder zurück in den Herstellungsprozess führen.

Nebst dem Recycling, bei dem der "Rohstoff" sortiert und in einem anderen Einsatzgebiet wieder eingesetzt wird, sind starke Bemühungen im Gange auch ein Upcycling, wie z.B. die Schaumstoffrückgewinnung weiter zu entwickeln. Bei diesem Verfahren wird z.B. ein Polyurethanschaumstoff sortenrein zurück ins Polyol gebracht aus welchem er u.a. hergestellt wurde. Dieses Polyol wird dann als neuer Rohstoff wieder zur Herstellung von neuem Schaumstoff eingesetzt.

Bei diesem Verfahren sind Fremdstoffe unerwünscht und es hat sich anhand von Versuchen gezeigt, dass Rückstände von Polychloropren-basierten Klebstoffen auf das Verfahren störend wirken können. Die Rückstände müssen deshalb ausgefiltert und einer separaten Verwertung bzw. Entsorgung zugeführt werden.

Generell gilt in Fachkreisen die Auffassung, dass es eher unsinnig ist, den - anteilmässig meist geringen - Klebstoffanteil aus Post-Consumer-Abfällen getrennt zurückzugewinnen und zu recyceln. Stattdessen wird der Ansatz verfolgt, dass der Klebstoff die stoffliche Wiederverwertung der geklebten Materialien möglichst wenig stören soll. Daher ist es wünschenswert, dass der Klebstoff möglichst gut verträglich mit den sonstigen Kunststoffen ist; also zum Beispiel mit diesen mischbar ist. Daher ist aus der Sicht des Recyclings zu fordern, dass der Klebstoff dem Substratmaterial möglichst ähnlich ist. Im Fall von Matratzen mit Schaumstoffen aus Polyurethan wäre somit ein Klebstoff auf Polyurethanbasis vorteilhaft gegenüber einem Polychloropren-basierten Klebstoff anzusehen.

Verschiedene Rohstofflieferanten entwickelten bereits Polyurethan-basierte Klebstoffe für 2K-Sprühanwendungen, welche am Markt auch verfügbar sind.

In diesem Zusammenhang beschreibt die WO 2021/043674 A1 (Covestro) z.B. Formulierungen enthaltend eine Mischung aus einer wässrigen Polyurethan- bzw. Polyurethan-Harnstoff-Dispersion (mit 60 bis 80 Gew.-% Polymergehalt), einem Weichmacher (20 - 40 Gew.-%) und einem Tackifierharz (0 bis 10 Gew.-%). Diese Klebstoffe sollen sich speziell für die Verklebung von Schaumsubstraten nach dem Zweikomponenten-Sprühkoagulationsverfahren eignen. Dabei wird der Klebstoff sowie ein Koagulationsmittel separat in eine Sprühpistole gefördert, im Sprühstrahl vermischt und koaguliert.

Nachteilig bei Sprühverfahren ist aber unter anderem der sogenannte Overspray bzw. der Anteil des Klebstoffs, welcher beim Sprühen nicht auf das Substrat gelangt, sondern in Form von Sprühnebel in die Umgebung entweicht. Zudem kann der Klebstoff durch Sprühen nicht besonders präzise Aufgetragen werden. So ist es mit Sprühverfahren ohne zusätzliche Massnahmen nicht möglich, gezielt ausgewählte Bereiche von Substraten, wie z.B. die Spitzen von Noppen bei Noppenschaum, zu beschichten und die Vertiefungen zwischen den Noppen unbeschichtet zu lassen.

Des Weiteren sind Zweikomponenten-Sprühkoagulationsverfahren tendenziell fehleranfällig, da die beiden Komponenten in definierten und konstanten Mischverhältnissen simultan aufgetragen werden müssen. Zwar ist es möglich, Klebstoffe auf Basis von Polyurethan- bzw. Polyurethan-Harnstoff-Dispersionen wie sie in der WO 2021/043674 A1 beschrieben sind als einkomponentige Klebstoff ohne Koagulationsmittel einzusetzen. Dabei geht aber die üblicherweise erwünschte bzw. benötigte Anfangshaftung verloren, was die Weiterverarbeitung der verklebten Substrate verzögert.

Es besteht daher nach wie vor Bedarf nach verbesserten Lösungen, welche die vorstehend genannten Nachteile nicht oder zumindest in geringerem Ausmass aufweisen.

### Darstellung der Erfindung

Aufgabe der Erfindung ist es daher, verbesserte Lösungen zum Verkleben von Substraten, insbesondere Schaumstoffen, bevorzugt Schaumstoffen auf Polyurethanbasis, bereitzustellen. Dabei soll im Besonderen eine möglichst einfache, sichere und/oder präzise Verklebung der Substrate ermöglicht werden. Dies mit Vorteil ohne dass Abstriche hinsichtlich Verarbeitungsgeschwindigkeit beim Verkleben und dem Upcycling von verklebten Substraten auf Polyurethanbasis gemacht werden müssen. Insbesondere soll die Lösung die Herstellung von Polsterkernen von Polstermöbeln, Kissen oder Matratzen verbessern.

Die Lösung der Aufgabe ist durch die Merkmale der unabhängigen Ansprüche definiert. Weitere Aspekte der Erfindung, sowie besonders bevorzugte Ausführungsformen sind Gegenstand der folgenden Beschreibung und der abhängigen Ansprüche.

Ein erster Aspekt der vorliegenden Erfindung bezieht sich auf ein Verfahren zum Verkleben von Substraten, insbesondere von Schaumstoffen, umfassend die Schritte:
a) Aufbringen eines Dispersionsklebstoffs auf einen zu verklebenden Bereich eines ersten Substrats durch Walzenauftrag;
b) Kontaktieren des zu verklebenden Bereichs des ersten Substrats mit einem zweiten zu verklebenden Substrat;
c) Verpressen der beiden Substrate, so dass ein verklebter Verbund aus erstem und zweitem Substrat erhalten wird, insbesondere so, dass der verklebte Verbund eine Anfangshaftung aufweist;
wobei der Dispersionsklebstoff eine wässrige Polyurethan-Dispersion sowie einen Weichmacher beinhaltet.

Das erfindungsgemässe Verfahren erlaubt es, den Klebstoff gleichmässig aufzutragen, ohne dass Overspray durch Sprühen entsteht. Zudem kann der Klebstoff präzise dort appliziert werden kann, wo er benötigt wird. Dies auch bei speziell geformten oder strukturierten Substraten, wie beispielsweise Noppenschaumstoff oder Pyramidenschaumstoff. Auch können problemlos verschiedene Kombinationen von Schaumstoffqualitäten verklebt werden.

Weiter kann ohne zusätzliche zweite Komponente eine gute Anfangshaftung erreicht werden, was wiederum eine rasche Weiterverarbeitung des Klebeverbunds ermöglicht. Der Begriff "Anfangshaftung" bezeichnet die Haltekraft eines Klebstoffes, die dieser unmittelbar nach dem Verkleben mit der zu verklebenden Oberfläche aufbaut. Die Anfangshaftung ist die initiale Haftkraft einer Verklebung, bevor die endgültige Belastbarkeit der verklebten Stelle, also die Endklebkraft erreicht wird.

Der erfindungsgemäss verwendete Dispersionsklebstoff liegt somit insbesondere als einkomponentiger Dispersionsklebstoff vor. Im Speziellen verfügt der Dispersionsklebstoff nicht über eine zweite, koagulierende Komponente.

Beim erfindungsgemässen Verfahren zum Verkleben von Substraten wird abgesehen vom Dispersionsklebstoff, welcher bevorzugt als einkomponentiger Dispersionsklebstoff vorliegt, insbesondere keine weitere Komponente, im Speziellen keine koagulierende Komponente auf den zu verklebenden Bereich des ersten und/oder zweiten Substrats aufgetragen. Dies bedeutet mit anderen Worten, dass vor dem Kontaktieren des zu verklebenden Bereichs des ersten Substrats mit einem zweiten zu verklebenden Substrat bzw. vor Schritt b) bevorzugt einzig der Dispersionsklebstoff und ausschliesslich auf den zu verklebenden Bereich des ersten Substrats aufgetragen wird.

Das Verfahren vereinfacht somit die Verklebung stark, ohne dass Abstriche hinsichtlich Weiterverarbeitungsgeschwindigkeit gemacht werden müssen. Dies kommt überraschend. Bislang ist man nämlich davon ausgegangen, dass bei Polyurethandispersionen kurz vor und/oder während dem Auftrag des Dispersionsklebstoffs eine koagulierende zweite Komponente zugemischt werden muss, um eine gute Anfangshaftung zu erreichen. Dass die Anfangshaftung durch die Zugabe eines Weichmachers verbessert, geschweige denn im beobachteten Ausmass erhöht werden kann, war für den Fachmann daher nicht zu erwarten. Ohne an die Theorie gebunden zu sein, wird davon ausgegangen, dass der Weichmacher in die Polyurethanpartikel eindiffundiert und dies die Anfangshaftung verbessert.

Der erfindungsgemäss verwendete Dispersionsklebstoff lässt sich des Weiteren als einkomponentige Zusammensetzung formulieren, welche ohne besonderen Massnahmen bei Temperaturen bis 30°C über mehrere Monate lagerstabil ist. Dies vereinfacht die Handhabung zusätzlich und das Risiko von Fehlmanipulationen wird reduziert.

Auch hinsichtlich Upcycling von Klebeverbunde auf Polyurethanbasis, wie sie z.B. bei Polsterkernen üblich sind, ist das erfindungsgemässe Verfahren besonders vorteilhaft, da der eingesetzte Dispersionsklebstoff auf Polyurethanbasis den Substratmaterialien sehr ähnlich ist.

Das erfindungsgemässe Verfahren bringt somit im Besonderen für die Herstellung und dem Upcycling von Polsterkernen von Polstermöbeln, Kissen oder Matratzen grosse Vorteile, im speziellen bei Modellen, welche Kontouren wie Noppen oder Ähnliches aufweisen.

Die im Zusammenhang mit der vorliegenden Erfindung als "Polyurethan-Dispersionen" bezeichneten Dispersionen enthalten als disperse Phase Partikel aus Polyurethanpolymeren in einer wässrigen Flüssigkeit oder Wasser als kontinuierliche Phase.

Die Polyurethanpolymere der Polyurethan-Dispersionen basieren auf Polymeren, welche durch Umsetzung von Polyolen, im speziellen Diolen, mit Polyisocyanaten, insbesondere Diisocyanaten, und optional mit Mono- und/oder Diaminen, erhältlich sind. Geeignete Polyurethanpolymere sind beispielsweise erhältlich durch die Umsetzung von mindestens einem Polyol mit mindestens einem Polyisocyanat. Diese Umsetzung kann dadurch erfolgen, dass das Polyol und das Polyisocyanat mit üblichen Verfahren, beispielsweise bei Temperaturen von 50 - 100°C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind. Solche Prozesse sind dem Fachmann an sich bekannt.

Der Begriff Polyurethanpolymer umfasst dabei sämtliche Polymere, welche nach dem sogenannten Polyisocyanat-Polyadditions-Verfahren hergestellt werden. Beispiele für Polyurethanpolymere sind Polyether-Polyurethane, Polyester-Polyurethane oder Polyether-Polyharnstoffe.

Als "Polyether-Polyurethan" wird ein Polymer bezeichnet, welches als Repetiereinheiten Ethergruppen aufweist und zusätzlich Urethangruppen enthält. Ein "Polyester-Polyurethan" ist entsprechend ein Polymer, welches als Repetiereinheiten Estergruppen aufweist und zusätzlich Urethangruppen enthält.

Die Polyole sind beispielsweise handelsübliche Polyole, welche bevorzugt bei Raumtemperatur flüssig sind. Zum Beispiel verfügen die Polyole über ein mittleres Molekulargewicht Mₙ im Bereich von mindestens 400 g/mol, insbesondere 400 bis 30'000 g/mol, besonders bevorzugt 1'000 bis 10'000 g/mol, insbesondere 2'000 bis 5'000 g/mol.

Im Besonderen sind die Polyole Polyesterpolyole und/oder Polyetherpolyole, insbesondere difunktionelle Polyesterpolyole und/oder difunktionelle Polyetherpolyole.

Polyesterpolyole können beispielsweise durch Polykondensation von Dicarbonsäuren mit Polyolen hergestellt werden.

Mögliche Dicarbonsäuren hierfür sind beispielsweise Adipinsäure, Bernsteinsäure, Methylbernsteinsäure, Glutarsäure, Sebacinsäure, Maleinsäure und/oder Dodecandisäure.

Bevorzugte Polyolkomponenten für die Polyesterpolyole sind Ethandiol-1,2, Butandiol-1,4 und Hexandiol-1,6, besonders bevorzugt sind Butandiol-1,4 und Hexandiol-1,6, ganz besonders bevorzugt ist Butandiol-1,4.

Polyesterpolyole können beispielsweise auf Bernsteinsäure, Methylbernsteinsäure, Glutarsäure, Adipinsäure und/oder Maleinsäure in Kombination mit 1,3-Propandiol, 1,4-Butandiol und/oder 1,6-Hexandiol basieren.

Bevorzugte Polyolkomponenten für die Polyetherpolyole sind z.B. Homo-, Co- und/oder Propfpolymerisate von Ethylenoxid und/oder des Propylenoxid.

Die Polyisocyanate sind insbesondere ausgewählt aus aliphatischen oder aromatischen Diisocyanaten.

Beispielsweise handelt es sich bei den Polyisocyanaten um 4,4'-Diphenylmethandiisocyanat, gegebenenfalls mit Anteilen von 2,4'- und/oder 2,2'-Diphenylmethandiisocyanat (MDI), 2,4-Toluylendiisocyanat oder Gemische davon mit 2,6-Toluylendiisocya¬nat (TDI), 1,4-Phenylendiisocyanat (PDI), Naphthalin-1,5-diisocyanat (NDI), 1,6-Hexandiisocyanat (HDI), 2,2(4),4-Trimethyl-1,6-hexamethylendiisocyanat (TMDI), Cyclohexan-1,3- oder -1,4-diisocyanat, 1-Isocyanato-3,3,5-trimethyl-5-isocyanatomethylcyclohexan (Isophorondiisocyanat oder IPDI), Perhydro-2,4'- oder -4,4'-diphenylmethandiisocyanat (HMDI), 1,3- oder 1,4-Bis(isocyanato-methyl)cyclohexan, m- oder p-Xylylendiisocyanat (XDI), m-Tetramethylxylylen-diisocyanat (TMXDI), oder Gemische davon.

Im Besonderen handelt es sich bei den Polyurethanpolymeren um anionische Polyurethanpolymere. Diese können z.B. erhalten werden, wenn bei der Umsetzung der Polyole mit den Polyisocyanaten zusätzlich ein Kettenverlängerer mit einer anionischen Gruppe, insbesondere eine Sulfonat-, Carboxy- und/oder Carboxylatgruppe, anwesend ist.

Insbesondere ist das enthaltene Polymer der Polyurethan-Dispersion teilkristallin oder kristallin. Als teilkristallin oder kristallin wird ein Polymer bezeichnet, wenn es in der Differential Scanning Calorimetry (DSC)-Messung nach DIN 65467: 1999 bei einer Aufheizrate von 20K/min einen Schmelzpeak aufweist, der einer Schmelzenthalpie > 5 J/g, bevorzugt > 10 J/g, besonders bevorzugt > 20 J/g und ganz besonders bevorzugt> 40 J/g entspricht.

Bezogen auf das Gesamtgewicht der wässrigen Polyurethan-Dispersion weist diese insbesondere einen Feststoffanteil von 30 - 60 Gew.-%, insbesondere 35 - 55 Gew.-%, im Speziellen 40 - 50 Gew.-%, auf. Der Feststoffanteil entspricht dabei insbesondere dem nichtflüchtigen Anteil gemessen nach DIN EN ISO 3251:2019 (1 g / 1 h / 125 °C).

Bevorzugt ist die wässrige Polyurethan-Dispersion eine anionische wässrige Polyurethan-Dispersion.

Die wässrige Polyurethan-Dispersion verfügt insbesondere über einen pH-Wert im Bereich von 6 - 9, wobei der pH-Wert bevorzugt gemessen ist nach DIN ISO 976:2016.

Im Besonderen weist die wässrige Polyurethan-Dispersion bei 23°C eine Viskosität von < 1'500 mPa·s, insbesondere < 1'000 mPa·s, beispielsweise 30 - 950 mPa·s, auf. Die Viskosität wir dabei bevorzugt gemäss Norm M092-ISO 2555:2018 mit Spindel L2 bei 30 Umdrehungen pro Minute gemessen.

Die Viskosität des eingesetzten Dispersionsklebstoffs enthaltend die wässrige Polyurethan-Dispersion und den Weichmacher beträgt vorzugsweise wenigstens 1'000 mPa·s, im Speziellen wenigstens 1'500 mPa·s, beispielsweise wenigstens 2'000 mPa·s. Eine obere Grenze der Viskosität des Dispersionsklebstoffs beträgt beispielsweise 15'000 mPa·s, im Speziellen 10'000 mPa·s, beispielsweise 5'000 mPa·s. Durch die Zugabe des Weichmachers wird die Viskosität der wässrigen Polyurethan-Dispersion typischerweise erhöht, so dass z.B. mit den wässrigen Polyurethan-Dispersion wie sie vorstehend beschrieben sind, die Dispersionsklebstoffe mit solchen Viskositäten erhalten werden können. Bei Bedarf können auch zusätzliche viskositätsmodifizierende Mittel, z.B. Verdicker, zugegeben werden.

Vorteilhaft ist es zudem wenn die wässrige Polyurethan-Dispersion eine Mindestfilmbildetemperatur von > 1°C, insbesondere > 2°C, im Speziellen > 4°C, beispielsweise 5°C oder mehr, aufweist. Die Mindestfilmbildetemperatur wird bevorzugt gemessen nach DIN ISO 2115:2001.

Besonders bevorzugt weist die wässrige Polyurethan-Dispersion die folgenden Merkmale in Kombination auf:
- die wässrige Polyurethan-Dispersion ist eine anionische wässrige Polyurethan-Dispersion;
- der pH-Wert liegt im Bereich von 6 - 9;
- bei 23°C weist die wässrige Polyurethan-Dispersion eine Viskosität von < 1'500 mPa·s, insbesondere < 1'000 mPa·s, beispielsweise 30 - 950 mPa·s, auf, wobei die Viskosität gemäss Norm M092-ISO 2555:2018 mit Spindel L2 bei 30 Umdrehungen pro Minute gemessen wird;
- eine Mindestfilmbildetemperatur der wässrige Polyurethan-Dispersion liegt bei > 1°C, insbesondere > 2°C, im Speziellen > 4°C, beispielsweise bei 5°C oder mehr.

Gemäss einer besonderen Ausführungsform enthält der Dispersionsklebstoff zusätzlich eine wässrige Acrylat-Dispersion. Das enthaltene Acrylatpolymer der Acrylat-Dispersion weist dabei bevorzugt eine Glasübergangstemperatur T_{g} von 0 bis -50°C, insbesondere -5 bis -40°C auf. Mit solchen Acrylat-Dispersionen kann der Klebstoff gezielt an spezielle Anwendungen angepasst werden.

Glasübergangstemperaturen, Schmelztemperaturen und Schmelzenthalpien können in an sich bekannter Weise mittels Differential Scanning Calorimetry (DSC) bestimmt werden.

Bezogen auf das Gesamtgewicht der wässrigen Acrylat-Dispersion weist diese insbesondere einen Feststoffanteil von 30 - 60 Gew.-%, insbesondere 40 - 60 Gew.-%, im Speziellen 50 - 60 Gew.-%, auf. Der Feststoffanteil entspricht dabei insbesondere dem nichtflüchtigen Anteil gemessen nach DIN EN ISO 3251:2019 (1 g / 1 h / 125 °C).

Bezogen auf das Gesamtgewicht des Dispersionsklebstoffs beträgt ein Anteil an wässrigen Dispersion(en) im Klebstoff, insbesondere der wässrigen Polyurethan-Dispersion oder der wässrigen Polyurethan-Dispersionen und der wässrigen Acrylat-Dispersion zusammen, insgesamt 50 - 95 Gew.-%, vorzugsweise 60 - 95 Gew.-%, insbesondere 70 - 95 Gew.-%. Damit werden optimale Klebewirkungen erreicht.

Als "Weichmacher", welche vorliegend im Dispersionsklebstoff enthalten sind, bezeichnet man chemische Substanzen, die Polymeren zugesetzt werden, um diese für die weitere Verarbeitung weicher, flexibler, dehnbarer und/oder geschmeidiger zu machen.

Der Weichmacher ist insbesondere ausgewählt aus Citraten, Benzoaten, Adipaten, Phthalaten, Sebacaten, Estern, dibasischen Estern, Polyethylenglycolester, Hexanoaten und/oder epoxydierte Sojaöle. Dibasische Ester sind insbesondere Dialkylester der Dicarbonsäuren Glutarsäure, Bernsteinsäure und Adipinsäure.

Besonders bevorzugt ist der Weichmacher ausgewählt aus einer oder mehreren der folgenden Substanzen:
- Citraten, insbesondere Acetyltributylcitrat und/oder oder Tributyl-O-acetylcitrat;
- Benzoaten, insbesondere Ester der Benzoesäure, bevorzugt Butylbenzoat, Isodecylbenzoat, Oxidipropyldibenzoat, Dipropyleneglycol-Dibenzoat, Diethyleneglycol-Dibenzoat und/oder Kombinationen aus Dipropyleneglycol-Dibenzoat und Diethyleneglycol-Dibenzoat;
- Adipaten, insbesondere Benzyl-(2-ethylhexyl)-adipat (BOA), Dioctyladipat (DOA), Dibutyladipat und/oder Di-n-butyl adipate (DBA);
- Phthalaten, insbesondere Benzylbutylphthalat (BBP), Diisononylphthalat (DINP), Bis(2-ethylhexyl)terephthalat (DOTP) und/oder Dibutyl-Terephthalat;
- Sebacaten, insbesondere Dibutylsebacat und/oder 2-Ethylhexylsebacat
- Ester in Form von dibasischem Isobutylester, Polyethylenglycolester, Polyethylenglycol-Oleat, Polyethylenglycol-Sebacat und/oder Tetraethylenglycolester;
- Hexanoate, insbesondere 2,2'-Ethylendioxydiethylbis(2- ethylhexanoat)

Im Speziellen ist der Weichmacher ein Benzoat und/oder Adipat.

Ein Anteil an Weichmacher beträgt, bezogen auf das Gesamtgewicht des Dispersionsklebstoffs, vorzugsweise 5 - 40 Gew.-%, insbesondere 5 - 30 Gew.-%.

Weiter kann der Dispersionsklebstoff zusätzlich ein oder mehrere Additive enthalten, insbesondere ein oder mehrere Additive aus der Gruppe bestehend aus: Verdicker, Emulgatoren, Entschäumer, Netzmittel, Biozide und Streckungsmittel. Ein Anteil an Additiven beträgt beispielsweise 0.01 - 10 Gew.-%, insbesondere 0.1 - 5 Gew.-%, bezogen auf das Gesamtgewicht des Dispersionsklebstoffs.

Die Herstellung der erfindungsgemäss verwendeten Dispersionsklebstoffe erfolgt bevorzugt durch Mischen der wässrigen Polyurethan-Dispersion mit dem Weichmacher und gegebenenfalls weiteren Komponenten. Dies kann in beliebiger Reihenfolge erfolgen.

Bevorzugt wird eine Polyurethan-Dispersion vorgelegt und anschliessend wird der Weichmacher, und optional weitere Komponenten, unter Rühren zugegeben.

Wässrige Polyurethan-Dispersionen als auch Acrylat-Dispersionen sind zudem kommerziell bei verschiedenen Anbietern erhältlich. Vorliegend können beispielsweise folgende Polyurethan-Dispersionen eingesetzt werden: Dispercoll^{®} U 53, Dispercoll^{®} U 54, Dispercoll^{®} U 84 und Dispercoll^{®} U XP 2643 (erhältlich bei Covestro Deutschland GmbH).

Unter einem Substrat wird vorliegend ein fester Stoff verstanden. Bevorzugt ist das erste Substrat und/oder das zweite Substrat ein Schaumstoff. Schaumstoffe sind im Allgemeinen künstlich hergestellte Stoffe mit zelliger Struktur. Bevorzugt ist das erste und/oder das zweite Substrat ein offenzelliger oder gemischtzelliger Schaumstoff.

Das Raumgewicht des ersten Schaumstoffs und/oder des zweiten Schaumstoffs beträgt z.B. 10 - 60 kg/m³, insbesondere 20 - 50 kg/m³.

In einer bevorzugten Ausführung der Erfindung ist das erste und/oder das zweite Substrat aus einem Schaumstoff aus Polyurethan und/oder einem Kautschuk gefertigt. Kautschuk ist beispielsweise Naturkautschuk (NR). Schaumstoffe aus Polyurethan sind beispielsweise Polyether-Polyurethan-Schaumstoffe oder Polyester-Polyurethanschaumstoffe.

In einer besonders bevorzugten Ausführung der Erfindung ist das erste und/oder das zweite Substrat ein Schaumstoff aus Polyurethan.

Das erste Substrat und/oder das zweite Substrat weist im zu verklebenden Bereich insbesondere eine strukturierte Oberfläche mit Vertiefungen und Erhebungen auf. Der Dispersionsklebstoff dabei bevorzugt ausschliesslich in den Bereichen der Erhebungen aufgetragen.

Insbesondere ist das erste Substrat und/oder das zweite Substrat ein Konturen-schaumstoff, welcher insbesondere über Noppen und/oder ein Pyramiden verfügt, und der Dispersionsklebstoff wird bevorzugt nur an den Spitzen der Noppen und/oder Pyramiden im zu verklebenden Bereich aufgebracht.

Beim "Walzenauftrag", wie er vorliegend beim Verkleben durchgeführt wird, erfolgt der Auftrag des Dispersionsklebstoffs auf das erste Substrat unter Verwendung einer Walze, welche als Auftragswalze bezeichnet wird. Auftragswalzen haben in der Regel eine Oberfläche aus Edelstahl, insbesondere Chromnickelstahl, im Speziellen Stahl vom Typ V2A, V4A und/oder 1.4301, etc. Dabei wird der Dispersionsklebstoff auf die Auftragswalze aufgetragen und von der Auftragswalze, welche mit dem ersten Substrat in Berührung gebracht wird, auf das erste Substrat übertragen.

Insbesondere erfolgt der Auftrag des Dispersionsklebstoffs beim Walzenauftrag in Schritt a) im Gleichlaufverfahren, so dass die Rotationsrichtung der Auftragswalze im Kontaktbereich mit dem ersten Substrat die gleiche Richtung aufweist, wie das an der Auftragswalze vorbeibewegte erste Substrat. Es kann aber auch ein Auftrag im Gegenlaufverfahren erfolgen.

Grundsätzlich kann der Dispersionsklebstoff beim Walzenauftrag mit unterschiedlichen Methoden auf die Auftragswalze aufgetragen werden.

Eine erste Möglichkeit besteht darin, in Schritt a) beim Walzenauftrag den Dispersionsklebstoff über einen Dispenser auf die rotierende Auftragswalze aufzubringen, und insbesondere mit einer Rakel gleichmässig auf der Auftragswalze zu verteilen. Das erste Substrat wird dann zum Aufbringen des Dispersionsklebstoffs im zu verklebenden Bereich mit der Auftragswalze in Kontakt gebracht, so dass der Dispersionsklebstoff von der Auftragswalze auf den zu verklebenden Bereich appliziert wird. Über den Abstand zwischen Rakel und Auftragswalze kann die Menge an Dispersionsklebstoff pro Flächeneinheit auf der Auftragswalze und damit die Auftragsmenge auf das Substrat kontrolliert werden.

Eine zweite und besonders bevorzugte Möglichkeit besteht darin, in Schritt a) beim Walzenauftrag den Dispersionsklebstoff unter Verwendung einer rotierenden Dosierwalze auf die rotierende Auftragswalze aufzubringen und das erste Substrat zum Aufbringen des Dispersionsklebstoffs im zu verklebenden Bereich mit der Auftragswalze in Kontakt zu bringen, so dass der Dispersionsklebstoff von der Auftragswalze auf den zu verklebenden Bereich appliziert wird.

Die Dosierwalze wird insbesondere exakt parallel zur Auftagswalze eingestellt und hat keinen direkten Kontakt mit dem Substrat.

Bei der zweiten Möglichkeit wird der Dispersionsklebstoff insbesondere zwischen Auftrags- und Dosierwalze im sogenannten Walzenstock vorgelegt. Der Dispersionsklebstoff verteilt sich durch den Spalt zwischen beiden Walzen gleichmässig und über den Abstand zwischen Dosierwalze und Auftragswalze kann die Menge an Dispersionsklebstoff pro Flächeneinheit auf der Auftragswalze und damit die Auftragsmenge auf dem Substrat kontrolliert werden. Das Verfahren mit Dosier- und Auftragswalze hat den Vorteil, dass weniger Scherkräfte auf den Dispersionsklebstoff einwirken.

Die Auftragswalze und die Dosierwalze laufen im Bereich des Spalts zwischen den beiden Walzen bevorzugt im Gleichlauf. Damit wird ein besonders gleichmässiger Klebstoffauftrag erhalten.

Bevorzugt wird der Dispersionsklebstoff in einer Menge von 10 - 100 g/m², insbesondere 20 - 80 g/m², bevorzugt 30 - 45 g/m², auf das erste Substrat aufgetragen. Geringere Mengen bewirken, je nach Substrat, eine unzureichende Klebewirkung. Bei grösseren Mengen dauert das Trocknen länger und die Anfangshaftung wird schlechter.

Gemäss einer bevorzugten Ausführungsform wird auf das zweite zu verklebende Substrat kein Dispersionsklebstoff oder kein anderer Klebstoff aufgetragen. Dies kann aber in speziellen Fällen dennoch der Fall sein.

Die beiden Substrate werden in Schritt c) vorzugsweise während einer Zeitdauer von total 1 - 60 Sekunden, insbesondere 2 - 30 Sekunden, bevorzugt 3 - 10 Sekunden, verpresst.

Ganz besonders bevorzugt werden die beiden Substrate in Schritt c) mehrmals verpresst, insbesondere 2 - 10 mal, bevorzugt 3 - 5 mal. Dies meint, dass nach einem ersten Verpressen, bei welchem ein Pressdruck angelegt wird, der Pressdruck auf die Substrate reduziert oder vollständig entfernt wird und anschliessend von neuem ein Pressdruck auf die beiden Substrate angelegt wird. Dies wird gegebenenfalls mehrmals wiederholt, wie angegeben. Dies bewirkt eine optimale Klebewirkung.

Der Pressruck beim Verpressen beträgt vorzugsweise 10'000 - 150'000 N/m², bevorzugt 40'000 - 80'000 N/m².

Der in Schritt c) erhaltene, verklebte Verbund weist insbesondere eine Anfangshaftung auf. Damit ist gemeint, dass unmittelbar nach dem Verpressen, insbesondere innerhalb von 1 - 5 Sekunden nach dem Verpressen, bereits eine initiale Haltekraft an der verklebten Stelle vorliegt. Die Anfangshaftung des unmittelbar nach dem Verpressen erhaltenen verklebten Verbunds ist im Besonderen > 0.1 N/cm², beispielsweise > 1 N/cm², im Speziellen > 2.5 N/cm² oder > 4.5 N/cm². Dies insbesondere beim Verkleben von Substraten aus Schaumstoffen, im Speziellen Polyuerthan-Schaumstoffen.

Nach Schritt b) und vor Schritt c) liegt im Besonderen eine geringere oder gar keine Anfangshaftung vor.

Im Speziellen wird mit dem Verfahren ein verklebter Verbund in Form eines Polsterkerns eines Polstermöbels, eines Kissens oder einer Matratze hergestellt. Es können aber auch beliebige andere Klebeverbunde hergestellt werden. Der Polsterkern besteht dabei bevorzugt aus Schaumstoff, insbesondere einem Polyurethanschaumstoff.

Ein weiterer Aspekt der vorliegenden Erfindung betrifft einen verklebten Verbund aus einem ersten und einem zweiten Substrat, insbesondere ein Polsterkern eines Polstermöbels, eines Kissens oder einer Matratze, wobei der Verbund erhältlich ist oder erhalten ist durch ein Verfahren wie es vorstehend beschrieben ist.

Weiter betrifft die Erfindung in einem zusätzlichen Aspekt die Verwendung eines Dispersionsklebstoffs basierend auf einer wässrigen Polyurethan-Dispersion sowie einem Weichmacher zum Verkleben von Substraten, insbesondere von Schaumstoffen, durch Walzenauftrag.

Ein weiterer Aspekt bezieht sich auf die Verwendung eines Weichmachers in einem Dispersionsklebstoff auf Basis einer Polyurethan-Dispersion zur Erhöhung der Anfangshaftung beim Verkleben von Substraten, insbesondere von Schaumstoffen, mit dem Dispersionsklebstoff.

Der Dispersionsklebstoff, die Polyurethan-Dispersion, und das Auftragsverfahren sind bei den genannten Verwendungen bevorzugt wie vorstehend beschrieben definiert.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung der Ausführungsbeispiele verwendeten Zeichnungen zeigen:
- Fig. 1a - 1d: eine schematische Illustration eines erfindungsgemässen Verfahrens zum Verkleben von Substraten mit einem Dispersionsklebstoff auf Basis einer wässrigen Polyurethan-Dispersion und einem Weichmacher;
- Fig. 2: einen an den Spitzen der Noppen mit dem Verfahren aus den Fig. 1a - 1d mit Dispersionsklebstoff beschichteten Noppenschaumstoff von der Seite.

Grundsätzlich sind in den Figuren gleiche Teile mit gleichen Bezugszeichen versehen.

### Wege zur Ausführung der Erfindung

### Verfahren zum Verkleben von Substraten

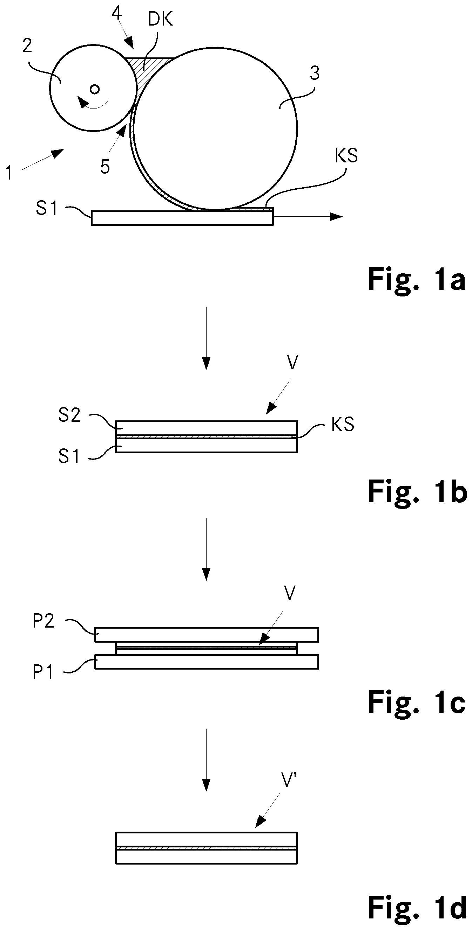

Fig. 1a - 1d zeigt eine schematische Illustration eines erfindungsgemässen Verfahrens zum Verkleben von Substraten mit einem Dispersionsklebstoffs DK auf Basis einer wässrigen Polyurethan-Dispersion und einem Weichmacher.

In Fig. 1a wird ein Dispersionsklebstoff DK durch Walzenauftrag auf die Oberseite eines ersten Substrats S1, z.B. ein Schaumstoffsubstrat, aufgetragen. Der Dispersionsklebstoff besteht beispielsweise aus einer wässrigen Polyurethan-Dispersion, optional mit einer zusätzlichen wässrigen Acrylat-Dispersion, und einem Weichmacher. Die Auftragung des Dispersionsklebstoffs DK erfolgt mit einer Walzenauftragsvorrichtung 1, welche über eine Auftragswalze 3 und eine parallel dazu angeordnete gegenläufige Dosierwalze 2 verfügt. Der Dispersionsklebstoff DK liegt dabei im Walzenstock 4 vor und wird über die Dosierwalze 2 auf die Auftragswalze 3 übertragen. Durch die Einstellung der Spaltbreite 5 zwischen Dosierwalze 2 und Auftragswalze 3 kann die Menge an Dispersionsklebstoff DK, welcher auf die Auftragswalze 3 und von dieser im Gleichlaufverfahren auf das entlang der Auftragswalze 3 vorbeibewegte Substrat S1 übertragen wird, kontrolliert werden.

Das Substrat S1 bewegt sich während dem Auftrag des Dispersionsklebstoffs DK durch eine nicht dargestellte Fördervorrichtung (z.B. ein Förderband) in Fig. 1a nach rechts. Dadurch wird eine definierte Klebstoffschicht KS aus Dispersionsklebstoff DK auf die Oberseite des Substrats S1 aufgetragen. Die Oberseite des Substrats S1 bildet somit den zu verklebenden Bereich des ersten Substrats S1.

Anschliessend wird ein zweites Substrats S2, z.B. ein weiteres Schaumstoffsubstrat, auf die mit der Klebstoffschicht beschichtete Oberfläche des ersten Substrats S1 aufgelegt, so dass ein Verbund V aus Substrat S1, Klebstoffschicht KS und Substrat S2 gebildet wird. Der Verbund V ist in Fig. 1b dargestellt. In diesem Zustand besteht keine signifikante Haftung zwischen den Substraten S1 und S2. Dies bedeutet, dass das zweite Substrat bei Bedarf problemlos wieder abgehoben und neu positioniert werden kann.

Im darauffolgenden Schritt, welcher in Fig. 1c dargestellt ist, wird der Verbund V zwischen zwei Pressplatten P1, P2 mit definierter Presskraft verpresst.

Dies führt zu einem Verbund V', welcher in Fig. 1d dargestellt ist und, je nach Parametern, eine Anfangshaftung aufweist. Nach dem Aushärten der Klebstoffschicht KS sind die beiden Substrate S1 und S2 wird die Endhaftung zwischen den beiden Substraten erreicht.

### Konturen-Schaumstoff mit Noppen

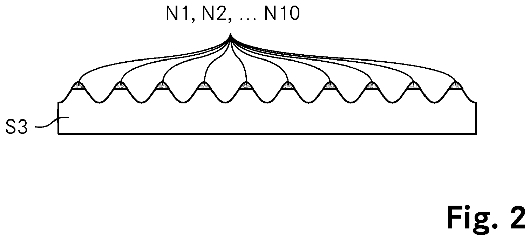

Fig. 2 zeigt ein weiteres Substrat S3 in Form eines Konturen-Schaumstoffs mit Noppen von der Seite. Dieser wurde mit der in Fig. 1a dargestellten Walzenauftragsvorrichtung 1 lediglich an den Spitzen der Noppen N1, N2 ... N10 mit Dispersionsklebstoff DK beschichtet, während die dazwischen liegenden Vertiefungen keine Klebstoffbeschichtung aufweisen.

Der so beschichtet Konturen-Schaumstoff kann anschliessend wie vorstehend beschrieben, mit einem weiteren Substrat verklebt werden.

### Tests

Zu Testzwecken wurden verschiedene Schaumstoffsubstrate mit dem vorstehend beschriebenen Verfahren miteinander verklebt.

Der verwendete Dispersionsklebstoff bestand aus 80 Gew.-% einer wässrigen Polyurethan-Dispersion in Form von Dispercoll^{®} U 84 sowie 20 Gew.-% eines Weichmachers in Form von Oxidipropyldibenzoat, welche vorgängig miteinander vermischt wurden. Der so hergestellt Dispersionsklebstoff war während mehreren Monaten lagerstabil.

Als Substrate eingesetzt wurden handelsübliche Schaumstoffplatten (500 mm × 500 mm × 30 mm) aus Polyurethanschaumstoff (PU) und Viscoschaumstoff (Visco), wie sie beispielsweise für die Herstellung von Matratzenkernen verwendet werden.

Tabelle 1 gibt einen Überblick über die eingesetzten Substrate, die Verfahrensparameter und die erzielten Haftungen. "T" steht für die Temperatur der Verklebung (Raumtemperatur RT oder 80°C in Wärmetunnel) und "t_{Abl}" für die Ablüftzeit nach dem Auftragen des Klebstoffs auf das erste Substrat bzw. die Wartezeit bis zum Auflegen des zweiten Substrats (ein unmittelbares Auflegen wird mit "-" bezeichnet). Die Auftragsmenge entspricht der aufgetragenen Menge an Dispersionsklebstoff auf dem ersten Substrat.

Die Prüfung der Anfangshaftung der Substrate vor und nach dem Verpressen des Klebeverbunds aus den beiden Substraten sowie die Endhaftung nach dem Aushärten der Klebstoffschicht erfolgte nach intern entwickelten Testverfahren bei welchen die Haftung auf einer Skala von 1 - 3 bewertet wird (1 = sehr gute Haftung; 2 = mittlere Haftung; 3 = keine Haftung).

Zum Verpressen der Klebeverbunde wurden diese dreimal nacheinander für eine Zeitdauer von je 2 Sekunden bei einer Presskraft von 60'000 N/m² zusammengepresst.

**Tabelle 1**

| **Exp.** | **Substrate** | **T** | **t_{Abl}** | **Auftrags-menge** | **Anfangshaftung** | | **Endhaftung** |
|---|---|---|---|---|---|---|---|
| | | | | | **vor Presse** | **nach: Presse** | |
| **A** | PU/PU | RT | - | 20 g/m² | 3 | 1 | 2 |
| **B** | PU/PU | RT | - | 40 g/m² | 3 | 1 | 1 |
| **C** | PU/PU | RT | - | 60 g/m² | 3 | 1 | 1 |
| **D** | PU/PU | RT | - | 80 g/m² | 3 | 2 | 1 |
| **E** | PU/PU | RT | 5 min | 100 g/m² | 3 | 2 | 1 |
| **F** | PU/PU | RT | - | 120 g/m² | 3 | 3 | 1 |
| **G** | PU/PU | 80°C | - | 120 g/m² | 3 | 1 | 1 |
| **H** | PU/Visco | RT | - | 60 g/m² | 3 | 1 | 1 |

Tabelle 1 zeigt, dass die Klebeverbunde vor dem Verpressen keine Anfangshaftung ("3") zeigen, nach dem Verpressen jedoch zumindest bei erhöhter Temperatur oder einem Ablüften eine mittlere Anfangshaftung ("2") erreicht wird. Optimal sind Auftragsmengen von 40 g/m² - 60 g/m², welche bei Raumtemperatur und ohne Ablüften zu hohen Anfangshaftungen ("1") als auch hohen Endhaftungen führen (Versuche B und C). Da Mengen von 40 g/m² im Wesentlichen gleich gute Haftwerte ergeben wie bei 60 g/m², sind die geringeren Mengen zu bevorzugen.

## Patentansprüche

1. Verfahren zum Verkleben von Substraten, insbesondere von Schaumstoffen, umfassend die Schritte:
a) Aufbringen eines Dispersionsklebstoffs (DK) auf einen zu verklebenden Bereich eines ersten Substrats (S1) durch Walzenauftrag;
b) Kontaktieren des zu verklebenden Bereichs des ersten Substrats (S1) mit einem zweiten zu verklebenden Substrat (S2);
c) Verpressen der beiden Substrate (S1, S2), so dass ein verklebter Verbund (V') aus erstem und zweitem Substrat erhalten wird, insbesondere so, dass der verklebte Verbund eine Anfangshaftung aufweist;
wobei der Dispersionsklebstoff eine wässrige Polyurethan-Dispersion sowie einen Weichmacher beinhaltet.

2. Verfahren nach Anspruch 1, wobei der Weichmacher ausgewählt ist aus einer oder mehreren der folgenden Substanzen:
- Citraten, insbesondere Acetyltributylcitrat und/oder oder Tributyl-O-acetylcitrat;
- Benzoaten, insbesondere Ester der Benzoesäure, bevorzugt Butylbenzoat, Isodecylbenzoat, Oxidipropyldibenzoat, Dipropyleneglycol-Dibenzoat, Diethyleneglycol-Dibenzoat und/oder Kombinationen aus Dipropyleneglycol-Dibenzoat und Diethyleneglycol-Dibenzoat;
- Adipaten, insbesondere Benzyl-(2-ethylhexyl)-adipat (BOA), Dioctyladipat (DOA), Dibutyladipat und/oder Di-n-butyl adipate (DBA);
- Phthalaten, insbesondere Benzylbutylphthalat (BBP), Diisononylphthalat (DINP), Bis(2-ethylhexyl)terephthalat (DOTP) und/oder Dibutyl-Terephthalat;
- Sebacaten, insbesondere Dibutylsebacat und/oder 2-Ethylhexylsebacat
- Ester in Form von dibasischem Isobutylester, Polyethylenglycolester, Polyethylenglycol-Oleat, Polyethylenglycol-Sebacat und/oder Tetraethylenglycolester;
- Hexanoate, insbesondere 2,2'-Ethylendioxydiethylbis(2- ethylhexanoat)

3. Verfahren nach einem der vorangehenden Ansprüche, wobei ein Anteil an Weichmacher, bezogen auf das Gesamtgewicht des Dispersionsklebstoffs, 5 - 40 Gew.-%, insbesondere 5 - 30 Gew.-% beträgt.

4. Verfahren nach einem der vorangehenden Ansprüche, wobei das enthaltene Polymer der Polyurethan-Dispersion teilkristallin oder kristallin ist.

5. Verfahren nach einem der vorangehenden Ansprüche, wobei die wässrige Polyurethan-Dispersion
- eine anionische wässrige Polyurethan-Dispersion ist;
- einen pH-Wert im Bereich von 6 - 9 aufweist;
- bei 23°C eine Viskosität von < 1'500 mPa·s, insbesondere < 1'000 mPa·s, beispielsweise 30 - 950 mPa·s, aufweist, wobei die Viskosität gemäss Norm M092-ISO 2555:2018 mit Spindel L2 bei 30 Umdrehungen pro Minute gemessen wird;
- eine Mindestfilmbildetemperatur von > 1°C, insbesondere > 2°C, im Speziellen > 4°C, beispielsweise 5°C oder mehr, aufweist.

6. Verfahren nach einem der vorangehenden Ansprüche, wobei der Dispersionsklebstoff zusätzlich eine wässrige Acrylat-Dispersion enthält, wobei das enthaltene Acrylatpolymer der Acrylat-Dispersion eine Glastemperatur T_{g} von 0 bis -50°C, insbesondere -5 bis -40°C, aufweist.

7. Verfahren nach einem der vorangehenden Ansprüche, wobei bezogen auf das Gesamtgewicht des Dispersionsklebstoffs ein Anteil der wässrigen Dispersion(en), insbesondere der wässrigen Polyurethan-Dispersion oder der wässrigen Polyurethan-Dispersionen und der wässrigen Acrylatdispersion zusammen, insgesamt 50 - 95 Gew.-%, vorzugsweise 60 - 95 Gew.-%, insbesondere 70 - 95 Gew.-%, beträgt.

8. Verfahren nach einem der vorangehenden Ansprüche, wobei die wässrige Polyurethan-Dispersion, bezogen auf das Gesamtgewicht der wässrigen Polyurethan-Dispersion, einen Feststoffanteil von 30 - 60 Gew.-%, insbesondere 35 - 55 Gew.-%, im Speziellen 40 - 50 Gew.-%, aufweist und/oder wobei die wässrige Acrylat-Dispersion, bezogen auf das Gesamtgewicht der wässrigen Acrylat-Dispersion, einen Feststoffanteil von 30 - 60 Gew.-%, insbesondere 40 - 60 Gew.-%, im Speziellen 50 - 60 Gew.-%, aufweist.

9. Verfahren nach einem der vorangehenden Ansprüche, wobei das erste Substrat (S1) und/oder das zweite Substrat (S2) ein Schaumstoff ist, insbesondere ein PolyurethanSchaumstoff.

10. Verfahren nach einem der vorangehenden Ansprüche, wobei das erste Substrat (S1) und/oder das zweite Substrat (S2) ein Kontouren-Schaumstoff ist, welcher insbesondere über Noppen und/oder ein Pyramiden verfügt, und der Dispersionsklebstoff nur an Spitzen von Noppen (N1, N2, N10) und/oder Pyramiden im zu verklebenden Bereich aufgebracht wird.

11. Verfahren nach einem der vorangehenden Ansprüche, wobei der Dispersionsklebstoff in einer Menge von 10 - 100 g/m², insbesondere 20 - 80 g/m², bevorzugt 30 - 45 g/m², auf das erste Substrat aufgetragen wird.

12. Verfahren nach einem der vorangehenden Ansprüche, wobei die Presskraft beim Verpressen 10'000 - 150'000 N/m², bevorzugt 40'000 - 80'000 N/m², beträgt.

13. Verfahren nach einem der vorangehenden Ansprüche, wobei in Schritt a) beim Walzenauftrag der Dispersionsklebstoff (DK) unter Verwendung einer rotierenden Dosierwalze (2) zwischen der Dosierwalze (2) und einer rotierenden Auftragswalze (3) aufgebracht wird und das erste Substrat (S1) zum Aufbringen des Dispersionsklebstoffs (DK) im zu verklebenden Bereich mit der Auftragswalze (3) in Kontakt gebracht wird, so dass der Dispersionsklebstoff (DK) von der Auftragswalze (3) auf den zu verklebenden Bereich appliziert wird.

14. Verklebter Verbund (V') aus einem erstem Substrat (S1) und einem zweiten Substrat (S2), insbesondere ein Polsterkern eines Polstermöbels, eines Kissens oder einer Matratze, wobei der Verbund erhältlich ist oder erhalten ist durch ein Verfahren nach einem der Ansprüche 1 - 13.

15. Verwendung eines Weichmachers in einem Dispersionsklebstoff auf Basis einer Polyurethan-Dispersion zur Erhöhung der Anfangshaftung beim Verkleben von Substraten, insbesondere von Schaumstoffen, mit dem Dispersionsklebstoff.
